# EUROPÄISCHE PATENTANMELDUNG

(11) **EP 4 125 186 A1**
(43) Veröffentlichungstag der Anmeldung: **01.02.2023**
(21) Anmeldenummer: 22185451.6
(22) Anmeldetag: 18.07.2022
(51) Int. Cl.: H02K 1/28, H02K 15/03

(54) **VERFAHREN ZUR HERSTELLUNG EINES ROTORPAKETS**

(30) Priorität: 28.07.2021 DE 102021208162
(71) Anmelder: VOLKSWAGEN AG, 38440 Wolfsburg (DE)
(72) Erfinder: Weber, Dr. Jan-Niklas, 30880 Laatzen (DE); Weikard, Fritz, 38321 Denkte (DE)

(57) **Zusammenfassung**

Die Erfindung betrifft ein Verfahren zur Herstellung eines Rotorpakets eines Rotors einer elektrischen Maschine, wobei das Rotorpaket durch stapelndes Aneinanderreihen einer Vielzahl an in mehreren aufeinanderfolgenden Stanzstufen zumindest einer Stanzvorrichtung aus einem Elektroblech getrennten Rotorlamellen (2) erzeugt wird. Hierfür wird über die Stanzstufen zunächst eine Rotorlamellenvorstufe (3) der Rotorlamellen (2) erzeugt, in welcher ein Kernloch (4) und eine Kumulation (5) aus wenigstens zwei sich vom Umfang (8) des Kernlochs (4) radial nach innen erstreckenden Federn (9) freigelegt werden. Das Freilegen erfolgt in dem Elektroblech dabei durch Trennen mittels wenigstens eines Stanzwerkzeugs der Stanzvorrichtung. Ferner wird eine jeweilige Rotorlamelle (2) oder Rotorlamellenvorstufe (3) in einer Ausstanzstufe aus dem Elektroblech getrennt und die Rotorlamellen (2) auf das Trennen folgend gestapelt. Dabei setzt sich die Kumulation (5) der Federn (9) aus einem Soll (6) an Federn (9) in den Rotorlamellen (2) und einem Überschuss (7) an Federn (9) zusammen, wobei der Überschuss (7) an Federn (9) in einer den die Kumulation (5) erzeugenden Stanzstufen nacheilenden Stanzstufe durch Trennen entfernt wird, sodass das Soll (6) in der Rotorlamellenvorstufe (3) verbleibt.

## Beschreibung

Die Erfindung betrifft ein Verfahren zur Herstellung eines Rotorpakets eines Rotors einer elektrischen Maschine, wobei das Rotorpaket durch stapelndes aneinanderreihen einer Vielzahl an Rotorlamellen erzeugt wird. Diese Rotorlamellen werden hierbei wiederum in mehreren aufeinanderfolgenden Stanzstufen zumindest einer Stanzvorrichtung aus einem Elektroblech getrennt. Hierfür wird über die Stanzstufen zunächst eine Rotorlamellenvorstufe der Rotorlamellen bereitgestellt, in welcher ein Kernloch und eine Kumulation aus wenigstens zwei sich vom Umfang des Kernlochs radial nach innen erstreckenden Federn durch Trennen mittels wenigstens eines Stanzwerkzeugs der Stanzvorrichtung in dem Elektroblech freigelegt werden. Eine jeweilige Rotorlamelle oder Rotorlamellenvorstufe wird in einer Ausstanzstufe aus dem Elektroblech getrennt und die Rotorlamellen auf das Trennen folgend gestapelt.

Bei elektrischen Maschinen und hierbei im Speziellen Elektromotoren wie den permanentmagneterregten Synchronmotoren, fremderregten Synchronmotoren, Asynchronmotoren und Gleichstrommotoren, dabei insbesondere bürstenlosen Gleichstrommotoren, treten, aufgrund der spezifischen Anordnung der Pole und Permanentmagnete im Stator und/oder Rotor, Rastmomente zwischen Stator und Rotor auf. Die Rastmomente sind - außer z. B. in Schrittmotoren - in der Regel unerwünscht, da diese eine als nachteilig anzusehende Drehmomentenwelligkeit und eine damit verbundene Laufunruhe der elektrischen Maschine verursachen.

Eine Möglichkeit, die Drehmomentenwelligkeit zu minimieren, besteht darin, eine Schrägung des Rotors der elektrischen Maschine vorzusehen. In der Regel werden hierfür in Schlitzungen des Rotorpakets einzubringende Permanentmagnete mit einem Winkelversatz zueinander im Rotorpaket angeordnet. Der Winkelversatz wird dabei für gewöhnlich über eine Segmentierung des Rotorpakets etabliert, wobei die die Permanentmagnete aufnehmenden Schlitzungen der einzelnen Segmente in Höhe des Winkelversatzes zueinander im Rotorpaket ausgerichtet sind. Die Ausrichtung lässt sich dabei im einfachsten Fall durch Verdrehung der aus einer Vielzahl an aufeinandergestapelten Blechlamellen bestehenden Segmente zueinander erreichen.

Eine Problemstellung, welche sich bei einem gleichgerichteten Stapeln der Blechlamellen zum Rotorpaket oder zu Segmenten des Rotorpakets ergibt, liegt in der für gewöhnlich vorliegenden ungleichmäßigen Dickenverteilung des zur Herstellung der Blechlamellen verwendeten Elektroblechs. Diese wird dabei durch den zur Erzeugung des Elektroblechs verwendeten Walzprozess bedingt und resultiert in Kippfehlern innerhalb des Rotorpakets. Diese äußern sich beispielsweise in in radiale Richtung des Rotorpakets vorliegenden Längenabweichungen und/oder in Längsrichtung des Rotorpakets vorliegenden unterschiedlichen radialen Ausdehnungen. Diese führen unweigerlich zu Unwuchten und einem unruhigen Lauf des Rotors und somit der elektrischen Maschine. Zudem entstehen aufgrund des Walzprozesses magnetische Vorzugsrichtungen im Elektroblech, die ebenfalls in einem unruhigen Lauf der elektrischen Maschine münden.

In diesem Zusammenhang ist der US 5 649 349 A ein Verfahren zur Fertigung von Rotorpaketen zu entnehmen, wobei die in der Regel ungleichmäßige Dickenverteilung des zur Herstellung der Blechlamellen verwendeten Elektroblechs ausgeglichen werden soll. Dies erfolgt dabei derart, dass aus der ungleichmäßigen Dickenverteilung resultierende Kippfehler im Rotorpaket vermieden werden. Hierzu wird ein gleichartig gerichtetes Stapeln der Blechlamellen umgangen, wobei die Blechlamellen bevorzugt um größere Winkel wie 90°-Winkel zueinander verdreht gestapelt werden. Dies gleicht die ungleichmäßige Dickenverteilung in den Blechlamellen aus.

Um einen solchen Winkelversatz beim Stapeln des Rotorpaketes einzuhalten und auch im gestapelten Rotorpaket gewährleisten zu können, werden in den Blechlamellen oftmals Justagehilfen eingebracht.

In dieser Hinsicht sind durch die US 4 445 272 A z. B. eine Vorrichtung sowie ein Verfahren zum Stapeln von Blechlamellen auf einer Rotorwelle bekannt. Die Vorrichtung weist dabei eine drehbar ausgeführte Matrize auf, in welche die aus einem Elektroblech ausgestanzten Blechlamellen auf die in der Matrize positionierte Rotorwelle aufstapelnd eingeführt werden. Die Blechlamellen werden beim Ausstanzen mit jeweils zwei Löchern und zwei Vorsprüngen zum Ausrichten der Blechlamellen versehen. Diese sind dabei um 90° zueinander versetzt. Um Löcher und Vorsprünge in Überdeckung zu bringen, wird die Matrize bei jedem Stanzvorgang um 90° gedreht.

Ist das Rotorpaket vollsymmetrisch ausgeführt, lassen sich die Blechlamellen wie in der US 4 445 272 A über einen einzelnen Stanzstempel erzeugen. Ist jedoch eine Schrägung im Rotorpaket vorzusehen, ist es regelmäßig notwendig, mehrere sich unterscheidende Stanzstempel in verschiedenen Stanzstufen vorzusehen, um Blechlamellen zu erzeugen, die einen sich in Abhängigkeit des Winkelversatzes zwischen den Segmenten des Rotorpakets unterscheidenden Relativwinkel zwischen Schlitzung und Justagehilfe aufweisen.

Die CN 2 03 850 942 U beschreibt eine mögliche Lösung, diese Problematik zu umgehen. Dabei offenbart die CN 2 03 850 942 U ein Rotorpaket eines Permanentmagnetmotors, welches axial in vier Segmente unterteilt ist und die Segmente dabei einen Winkelversatz zueinander aufweisen. In einer Ausführungsform wird die Gewährleistung des notwendigen Winkelversatzes zwischen den Segmenten und somit deren Ausrichtung gegenüber einander über in die Blechlamellen eingebrachte Justagelöcher realisiert, welche radial zu einer kreisrunden Mittenöffnung beabstandet sind. Dabei werden zwei Sätze an Justagelöchern zugleich, also mittels eines Stanzstempels, in die Blechlamellen eingebracht, wobei die Sätze einen sich unterscheidenden Relativwinkel zu zugehörigen Schlitzungen aufweisen. Durch Überlagerung eines gleichen Satzes lässt sich so eine Ausrichtung innerhalb eines Segments und durch Überlagerung unterschiedlicher Sätze eine Ausrichtung zwischen den Segmenten erreichen. Diese Ausgestaltung bedingt dabei jedoch ein Aufschrumpfen und somit eine kraftschlüssige Übertragung eines Drehmomentes zwischen Rotorpaket und Rotorwelle, was die Höhe des übertragbaren Drehmoments begrenzt.

Zur Übertragung höherer Drehmomente sind formschlüssige Verbindungen vorzuziehen. Auch hierzu wird durch die CN 2 03 850 942 U eine Ausführungsform beschrieben, wobei die Blechlamellen des Rotorpakets sich vom Umfang der Mittenöffnung radial nach innen erstreckende Zähne aufweisen. Die Zähne dienen dabei neben der Übertragung des Drehmoments auf die Rotorwelle zugleich als Justagehilfe. An jeder Blechlamelle sind hierfür vier Zähne vorgesehen, wobei jeweils ein Zahnpaar zweier sich gegenüberliegender Zähne einen Relativwinkel gegenüber einer zugeordneten Schlitzung zur Aufnahme von Permanentmagneten aufweisen. Die hierbei spitzen Relativwinkel der beiden Zahnpaare sind dabei in ihrer Höhe unterschiedlich gestaltet. Ferner werden aufeinanderfolgende Blechlamellen um 180° winkelversetzt zueinander im Rotorpaket ausgerichtet. So lässt sich das aus vier Segmenten bestehende Rotorpaket zwar aus identischen Blechlamellen erzeugen, jedoch formen die jeweils vier Zähne der Blechlamellen im Rotorpaket sechs in Längsrichtung des Rotorpakets verlaufende, teils unterbrochene Zahnreihen. Somit ist es in nachteiliger Weise notwendig, in der Rotorwelle auch sechs Nuten zur Aufnahme der Zahnreihen vorzusehen. Hierdurch ergibt sich ein hoher Bearbeitungsaufwand der Rotorwelle, welcher wiederum hohe Fertigungskosten bedingt.

Der US 2014 / 0 265 718 A1 ist darüber hinaus ein Rotorpaket sowie ein Verfahren zur Herstellung des Rotorpakets zu entnehmen. Das Rotorpaket weist dabei nach dessen Fertigstellung zwei sich gegenüberliegende Zahnreihen auf, welche in jeweils eine Nut einer Rotorwelle eingreifen sollen. Somit sind in der Rotorwelle im Vergleich zur CN 2 03 850 942 U auch lediglich zwei Nuten vorzusehen. Folglich weist jede Blechlamelle des Rotors zur Ausbildung der Zahnreihen zwei sich vom Umfang der Mittenöffnung radial nach innen erstreckende Zähne auf, welche während des Ausstanzprozesses der Blechlamellen ausgeformt werden. Hierfür ist in einer Weiterbildung des Verfahrens vorgesehen, dass zunächst über zwei hintereinander angeordnete und einer Ausstanzstufe vorgeordnete Stanzstufen zwei Lamellenvorstufen in dem auszustanzenden Elektroblech erzeugt werden, deren Zähne einen Relativwinkel von 90° zueinander aufweisen. Hierfür sind in nachteiliger Weise wiederum zwei sich voneinander unterscheidende Stanzstempel mit vier Teilwerkzeugen vorgesehen. Die Teilwerkzeuge sind dabei im Grunde gleichartig ausgebildet, weisen folglich jedoch einen Relativwinkel von 90° zueinander auf. Über die Teilwerkzeuge werden in jeweils einem Stanzschritt zwei die zwei gegenüberliegenden Zähne vorausformende Zahnausschnitte und zwei um 90° zu den Zahnausschnitten versetzt ausgeformte Leerausschnitte aus dem Elektroblech ausgestanzt, wobei die Ausformung der Mittenöffnung in diesen Stanzstufen noch nicht umfasst ist. Das Ausformen der Mittenöffnung erfolgt hingegen in einer sich unmittelbar anschließenden Stanzstufe, wobei der Stanzstempel dieser Stanzstufe über das Mittenloch sowie vier einen Relativwinkel von 90° zueinander aufweisenden Aussparungen verfügt, die derart positioniert sind, dass die jeweils zwei bereits vorgestanzten Zähne der Lamellenvorstufen unabhängig von ihrer Winkelausrichtung beim Ausstanzen des Mittenlochs nicht weiter bearbeitet werden. In einer abschließenden Stanzstufe wird die derart vorgestanzte Blechlamelle aus dem Elektroblech getrennt und teils um 90° gedreht, dass die Zähne der Blechlamellen fluchtend übereinanderliegen. Neben der bereits für sich genommen als nachteilig anzusehenden Verwendung zweier Stanzstempel zur Erzeugung der beiden Lamellenvorstufen birgt diese Ausgestaltung zudem den Nachteil, dass die aus den Lamellenvorstufen erzeugten Blechlamellen und hierbei insbesondere die Zähne der Blechlamellen aufgrund sich geringfügig unterscheidender Stanzstempel derart voneinander abweichende Toleranzen aufweisen, sodass über das Stapeln dieser Blechlamellen Maßhaltigkeitsfehler im Rotorpaket entstehen.

Vor diesem Hintergrund liegt der Erfindung die Aufgabe zugrunde, ein Verfahren der eingangs genannten Art derart auszuführen, dass die Möglichkeit eröffnet wird, eine Verringerung der zur Erzeugung der Blechlamellen notwendigen Stanzwerkzeuge zu gewährleisten und zugleich eine geringe Anzahl von Nuten in der Rotorwelle beibehalten werden kann.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zur Herstellung eines Rotorpakets eines Rotors einer elektrischen Maschine vorgesehen, bei welchem das Rotorpaket durch stapelndes Aneinanderreihen einer Vielzahl an Rotorlamellen erzeugt wird. Hierbei werden die Rotorlamellen in mehreren aufeinanderfolgenden Stanzstufen zumindest einer Stanzvorrichtung aus einem Elektroblech getrennt. Vor dem Trennen wird hierfür über die Stanzstufen zunächst eine Rotorlamellenvorstufe der Rotorlamellen erzeugt, in welcher ein Kernloch und eine Kumulation aus - respektive eine Anzahl an - wenigstens zwei sich vom Umfang des Kernlochs radial nach innen erstreckenden Federn - der Rotorlamellen - in dem Elektroblech freigelegt werden. Die Federn sind dabei bevorzugt zum Eingriff in eine Nut einer Rotorwelle des Rotors eingerichtet. Erfindungsgemäß erfolgt das Freilegen, welches entsprechend einem Einbringen entspricht, durch Trennen mittels wenigstens eines Stanzwerkzeugs der zumindest einen Stanzvorrichtung. Es können folglich auch mehrere Stanzvorrichtungen zur Durchführung des Verfahrens vorgesehen sein. In bevorzugter Ausführung wäre jedoch lediglich eine Stanzvorrichtung mit einem Stanzwerkzeug vorgesehen, welches als ein mehrere Stanzstufen aufweisendes Folgeverbundwerkzeug ausgebildet ist. Darüber hinaus wird eine jeweilige Rotorlamelle oder Rotorlamellenvorstufe in einer Ausstanzstufe aus dem Elektroblech getrennt und die Rotorlamellen auf das Trennen - mittelbar oder unmittelbar - folgend - insbesondere in einer Matrize der Stanzvorrichtung - gestapelt. Vor oder während diesem Stapeln der Rotorlamellen kann vorgesehen sein, dass zumindest ein Teil respektive eine Teilmenge der Rotorlamellen oder der Rotorlamellenvorstufen gedreht wird. So ließen sich die Federn gegenüber einander ausrichten. Das Drehen könnte dabei unter anderem in einer Rotationsmatrize oder entsprechend einer Rotationsbremse erfolgen. Erfindungsgemäß ist zudem vorgesehen, dass sich die Kumulation der Federn aus einem Soll an Federn in den - das Rotorpaket tatsächlich ausbildenden - Rotorlamellen und einem Überschuss an Federn zusammensetzt. Hierbei wird der Überschuss an Federn in einer den die Kumulation erzeugenden Stanzstufen nacheilenden Stanzstufe durch Trennen entfernt, sodass das Soll in der Rotorlamellenvorstufe verbleibt. Grundsätzlich werden somit zunächst das Kernloch und die Vielzahl der der Kumulation zugehörigen Federn in den - damit - erzeugten Rotorlamellenvorstufen freigelegt, wobei das Freilegen in mehreren Stanzstufen oder bevorzugt einer einzigen Stanzstufe durchgeführt wird. In einer weiteren Stanzstufe, welche diesen dem Freilegen dienenden Stanzstufen oder der - einzigen - dazu dienenden Stanzstufe nacheilt, wird anschließend folglich der Überschuss an Federn entfernt und hierbei im Speziellen entsprechend weggestanzt. Dies bietet den Vorteil, dass lediglich eine geringe Anzahl an Nuten, z. B. zwei oder gar lediglich eine Nut, in einer Rotorwelle vorzusehen sind und trotzdem das Potential besteht, lediglich ein Stanzwerkzeug zur Erzeugung unterschiedlicher Rotorlamellen vorsehen zu müssen. Das Entfernen des Überschusses könnte dabei vor oder nach einem Drehen der Rotorlamellen oder der Rotorlamellenvorstufen erfolgen. Weiterhin ist es entsprechend denkbar, dass dem Soll mehrere Federn zugehören, wobei das Soll jedoch bevorzugt aus lediglich einer Feder besteht. Das Rotorpaket sollte insbesondere mehrere Segmente aufweisen, wobei die Anzahl der freigelegten, der Kumulation zugehörigen Federn bevorzugt der Anzahl an Segmenten des Rotorpakets entsprechen würde.

In einer besonders vorteilhaften Weiterbildung der Erfindung weist eine jede der dem Soll zugehörigen - und somit in einer Rotorlamellenvorstufe verbleibenden - Feder eine Sollposition auf, wobei diese Sollposition in den erzeugten Rotorlamellenvorstufen im Lauf des Verfahrens - demnach insbesondere im Lauf der Herstellung eines Rotorpakets - über die Positionen der der Kumulation zugehörigen Federn wechselt. Ein solcher Wechsel würde damit zumindest einmal insbesondere im Lauf der Herstellung eines Rotorpakets erfolgen. Hierbei würden dem Soll zugehörige Federn nach dem Wechsel eine Sollposition aufweisen, welche sich folgerichtig von der Sollposition vor dem Wechsel unterscheidet. Daraus folgend würde sich somit auch die Position des Solls in den erzeugten Rotorlamellenvorstufen nach dem Trennen des Überschusses nach einem Wechsel der Sollposition gegenüber der Position vor einem Wechsel unterscheiden. Durch einen solchen Wechsel der Sollposition kann es vorteilhaft ermöglicht werden, bei Bedarf eine ungleichmäßige Dickenverteilung des zur Herstellung der Blechlamellen verwendeten Elektroblechs auszugleichen, welche in den Rotorlamellen zu einer Dickenabweichung führen und in Kippfehlern innerhalb des Rotorpakets resultieren würde. Denkbar wäre in diesem Zusammenhang, die Dickenverteilung des Elektroblechs insbesondere beim Erzeugen einer Rotorlamellenvorstufe zu bestimmen, bevorzugt zu vermessen und die Sollposition in Abhängigkeit der Dickenverteilung festzulegen.

In einer darüber hinaus als vielversprechend anzusehenden Ausführungsform des Verfahrens ist zudem vorgesehen, dass die Sollposition jeder dem Soll zugehörigen - und somit in einer Rotorlamellenvorstufe verbleibenden - Feder je aufeinanderfolgend erzeugter Rotorlamellenvorstufen über die Positionen der der Kumulation zugehörigen Federn wechselt. So ließe sich insbesondere auch ohne eine Bestimmung der Dickenverteilung des zum Erzeugen der Rotorlamellenvorstufen verwendeten Elektroblechs eine vorliegende ungleichmäßige Dickenverteilung ausgleichen und somit die Entstehung eines Kippfehlers im Rotorpaket vermeiden. Die in den Rotorlamellen vorherrschenden Dickenabweichungen würden sich hierbei über die Vielzahl der im Rotorpaket gestapelten Rotorlamellen ausgleichen.

Eine Gestaltungsform der Erfindung lässt sich ferner dann als gewinnbringend beschreiben, wenn die Sollposition jeder dem Soll zugehörigen - und somit in einer Rotorlamellenvorstufe verbleibenden - Feder in je aufeinanderfolgend erzeugten Rotorlamellenvorstufen schrittweise umlaufend auf eine in - eine einzige - Umfangsrichtung des Kernlochs unmittelbar benachbarte Position der der Kumulation zugehörigen Federn wechselt oder entsprechend fortschreitet. Neben einer ungleichmäßigen Dickenverteilung des zum Erzeugen der Rotorlamellen verwendeten Elektroblechs ließen sich aufgrund des stetigen, regelmäßigen Wechsels der Sollposition überaus gewinnbringend auch eine aufgrund des Walzprozesses im Elektroblech entstehende magnetische Vorzugsrichtung ausgleichen und so ein ruhiger Lauf der elektrischen Maschine sicherstellen.

Als günstig stellt sich eine Ausbildung des erfindungsgemäßen Verfahrens ferner dann dar, wenn lediglich eine einzige Stanzstufe mit einem Stanzwerkzeug zum Freilegen des Kernlochs und/oder der Kumulation von Federn in einer jeden Rotorlamellenvorstufe bestimmt ist. Hierbei sollte zumindest die Kumulation in einer einzigen Stanzstufe erzeugt werden. Dies bietet den Vorteil einer stets gleichbleibenden Ausrichtung der Federn der erzeugten Rotorlamellenvorstufen gegenüber einander, welche bei einem Freilegen in mehreren Stanzstufen mit mehreren Stanzwerkzeugen einer Variation unterliegen kann. So kann bei einem Drehen der Rotorlamellenvorstufen oder der Rotorlamellen eine präzise Ausrichtung dieser gegenüber einander über die Federn stets gewährleistet werden. Gegebenenfalls in den Rotorlamellen ebenfalls durch Trennen freigelegte Ausnehmungen, welche im Rotorpaket Schlitzungen zur Aufnahme von Dauermagneten bilden sollen, würden somit überaus präzise miteinander fluchten, sodass eine eventuell vorzusehende Nachbearbeitung der Schlitzungen entfallen kann.

In einer weiteren mit Vorteil behafteten Ausbildung der Erfindung ist es angedacht, dass sich die den Überschuss bildenden - und somit in den Rotorlamellen nicht verbleibenden - Federn der Kumulation in einer - die Sollposition folglich nicht umfassenden - Trennposition befinden, wobei diese sich in der Trennposition befindenden Federn in der - einzigen - nacheilenden Stanzstufe mittels eines - einzigen - trennvariablen Stanzwerkzeugs positionsselektiv, also für jede Position einer Feder innerhalb der Kumulation im Einzelnen ermöglichend, aus der Kumulation getrennt werden. Hierdurch lässt sich eine ohne trennvariables Stanzwerkzeug notwendige Anordnung mehrerer Stanzwerkzeuge, welche insbesondere jeweils lediglich eine Feder oder einen Teil der Federn entfernen, gewinnbringend vermeiden. Dies steigert einerseits die Taktzeit und senkt zugleich die Fertigungskosten sowie den Platzbedarf der Stanzvorrichtung.

Die Erfindung weiterbildend ist es darüber hinaus als Erfolg versprechend anzusehen, wenn das trennvariable Stanzwerkzeug eine Anzahl an Teilwerkzeugen aufweist, welche der Anzahl des Überschusses an Federn entspricht. Hierbei sind die Teilwerkzeuge und/oder das Stanzwerkzeug drehbar ausgeführt und die Teilwerkzeuge des trennvariablen Stanzwerkzeugs werden zum Trennen des Überschusses durch Drehen in Überdeckung mit den sich in Trennposition befindenden Federn des Überschusses gebracht. Über eine solche Ausgestaltung lässt sich in vorteilhaft einfacher Weise ein trennvariables Stanzwerkzeug bereitstellen, mit welchem die dem Überschuss zugehörigen Federn positionsselektiv aus der Kumulation der Federn entfernbar sind.

Ferner ist auch eine Ausgestaltung der Erfindung dahingehend möglich, dass die Rotorlamellenvorstufen oder die Rotorlamellen selbst - insbesondere nach dem Trennen aus dem Elektroblech - in einer Stanzstufe drehbar gelagert werden und der Überschuss an Federn über ein drehfestes Stanzwerkzeug, welches ebenso eine Anzahl an Teilwerkzeugen aufweist, die der Anzahl des Überschusses an Federn entspricht, aus den Rotorlamellenvorstufen oder der Rotorlamelle entfernt wird. Hierfür würden folgerichtig die dem Überschuss zugehörigen Federn mit den Teilwerkzeugen des Stanzwerkzeugs in Überdeckung gebracht werden.

In einer zur vorgenannten Weiterbildung abweichenden, jedoch nicht minder vorteilhaften Ausführungsform der Erfindung weist das trennvariable Stanzwerkzeug zwar wiederum eine Anzahl an Teilwerkzeugen auf, diese entspricht jedoch der Anzahl der Kumulation an Federn. Ferner sind hierbei die Teilwerkzeuge über Koppelelemente in Eingriff bringbar und die sich in Überdeckung mit den sich in Trennposition befindenden Federn des Überschusses befindenden Teilwerkzeuge werden zum Trennen des Überschusses in Eingriff gebracht. Bei den Koppelelementen könnte es sich beispielsweise um Schieber handeln, welche dem Elektroblech abgewandt, unterhalb der Teilwerkzeuge angeordnet und zwischen einer Nichteingriffsstellung und einer Eingriffsstellung verfahrbar ausgeführt sind. Ein Verfahren eines Schiebers in die Eingriffsstellung und somit zwischen eines der Teilwerkzeuge und einen Werkzeugunterbau des Stanzwerkzeugs würde das zugeordnete Teilwerkzeug folglich in Eingriff bringen. Sich nicht im Eingriff und somit in Nichteingriffsstellung befindende Teilwerkzeuge wären gegenüber sich im Eingriff und somit in Eingriffsstellung befindenden Teilwerkzeugen rückversetzt angeordnet, wodurch ein Trennen durch diese sich nicht im Eingriff befindenden Teilwerkzeuge verhindert wird.

Eine weitere vorteilhafte Ausgestaltung der Erfindung besteht zudem darin, dass das Drehen einer Rotorlamellenvorstufe oder einer Rotorlamelle um eine erste Drehachse normal zur und/oder um eine sich von der ersten Drehachse unterscheidende zweite Drehachse in der Ebene der Rotorlamellenvorstufe oder der Rotorlamelle erfolgt. Es erfolgt somit zumindest ein Drehen um eine Drehachse, wobei auch ein Drehen um zwei Drehachsen möglich ist. Die erste Drehachse und die zweite Drehachse liegen hierbei senkrecht aufeinander, wobei die erste normal zur Ebene der Rotorlamellenvorstufe oder der Rotorlamelle gerichtete Drehachse parallel zur Längsachse des Rotorpakets verläuft respektive mit dieser Längsachse zusammenfällt. Das Drehen um die zweite in der Ebene und hierbei insbesondere mittig durch die Rotorlamellenvorstufe oder die Rotorlamelle verlaufende Drehachse ist auch als Wenden der der Rotorlamellenvorstufe oder der Rotorlamelle zu betrachten. So lassen sich die Rotorlamellenvorstufen oder die Rotorlamellen durch das Drehen um die erste und/oder die zweite Drehachse überaus gewinnbringend gegenüber einander ausrichten, sodass insbesondere die Federn der Rotorlamellenvorstufen oder der Rotorlamellen in - ausschließlich - einer Federreihe zueinander fluchtend ausgerichtet sind.

Grundsätzlich wäre im Rahmen einer erfindungsgemäßen Ausgestaltung des Verfahrens vorgesehen, dass die freigelegte Kumulation eine Anzahl an Federn umfasst, welche der Polzahl und somit der doppelten Polpaarzahl des Rotors respektive der elektrischen Maschine entspricht. Bei einer Gleichverteilung der Federn in Umfangsrichtung des Kernlochs ergäbe sich ein Winkelversatz zwischen den Federn in Höhe von 360° geteilt durch die Polzahl. Das Soll an Federn würde hierbei bevorzugt eine Feder umfassen.

In überaus praxisgerechter Weise besteht die Kumulation ferner jedoch aus vier in Umfangsrichtung des Kernlochs gleichmäßig verteilt ausgeformten - und somit einen gleichen Winkelversatz von 90° gegenüber einander aufweisenden - Federn. Das Soll beträgt zudem - ausschließlich - eine Feder und der Überschuss somit drei Federn. So lässt sich in gewinnbringender Weise ein Rotorpaket erzeugen, welches eine quasi optimale Ausgewogenheit zwischen Fertigungsaufwand und den mit diesem zusammenhängenden Fertigungskosten und einem das Rotorpaket aufweisenden Rotor, der in einer elektrischen Maschine geringe Rastmomente und somit eine geringe Drehmomentenwelligkeit verbunden mit einer hohen Laufruhe aufweist.

In den Zeichnungen sind Ausführungsbeispiele der Erfindung dargestellt, wobei diese im Folgenden näher beschrieben werden. Die Zeichnungen zeigen in
- Fig. 1a: eine im Rahmen des Verfahrens erzeugte Rotorlamellenvorstufe;
- Fig. 1b: eine im Rahmen des Verfahrens erzeugte Rotorlamelle;
- Fig. 2: ein Rotorpaket;
- Fig. 3: einen Ausgleich von Dickenabweichungen durch Drehen von Rotorlamellen;
- Fig. 4a bis 4d: Rotorlamellenvorstufen mit unterschiedlichen Sollpositionen der dem Soll zugehörigen Feder;
- Fig. 5: ein Rotorpaket mit einem Ausgleich der Dickenabweichungen sowie der magnetischen Vorzugsrichtungen der Rotorlamellen;
- Fig. 6: ein Rotor mit segmentiertem Rotorpaket;
- Fig. 7a bis 7d: Segmente eines Rotorpakets;
- Fig. 8a, 8b: die Lage von erster und zweiter Drehachse in Relation zu einer Rotorlamelle;
- Fig. 9a, 9b: Detaildarstellungen von Rotorwellen.

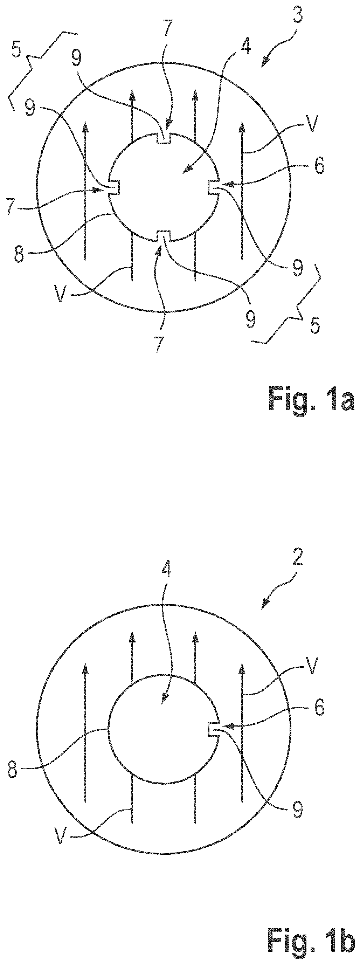

In Figur 1a ist eine separiert dargestellte und im Rahmen des Verfahrens grundsätzlich zunächst in einem Elektroblech erzeugte Rotorlamellenvorstufe 3 aufgezeigt, in welcher das Kernloch 4 und eine Kumulation 5 aus vier sich vom Umfang 8 des Kernlochs 4 radial nach innen erstreckenden Federn 9 durch Trennen mittels wenigstens eines Stanzwerkzeugs einer Stanzvorrichtung, durch welche das Elektroband geführt wird, freigelegt wurde. Hierbei wurden sowohl das Kernloch 4 als auch die Kumulation 5 von Federn 9 in einer einzigen Stanzstufe mit einem Stanzwerkzeug freigelegt. Figur 1b zeigt zudem eine aus einer wie in Figur 1a dargestellten Rotorlamellenvorstufe 3 erzeugte Rotorlamelle 2, wobei diese in einer Ausstanzstufe aus dem Elektroblech getrennt wird. Hierbei wird vor oder nach dem Trennen der Rotorlamellenvorstufe 3 respektive der Rotorlamelle 2 aus dem Elektroblech der in Figur 1a bezeichnete Überschuss 7 an Federn 9, welcher Teil der Kumulation 5 ist, in einer Stanzstufe durch Trennen respektive Ausstanzen entfernt. Diese Stanzstufe eilt dabei der Stanzstufe, welche die Kumulation 5 erzeugt, nach. Neben dem Überschuss 7 besteht die Kumulation 5 zudem aus dem Soll 6, welchem eine Feder 9 zugehört. Dieses Soll 6, hier bestehend aus der einen Feder 9, verbleibt nach dem Trennen des Überschusses 7 in der Rotorlamellenvorstufe 3 sowie entsprechend auch in der Rotorlamelle 2.

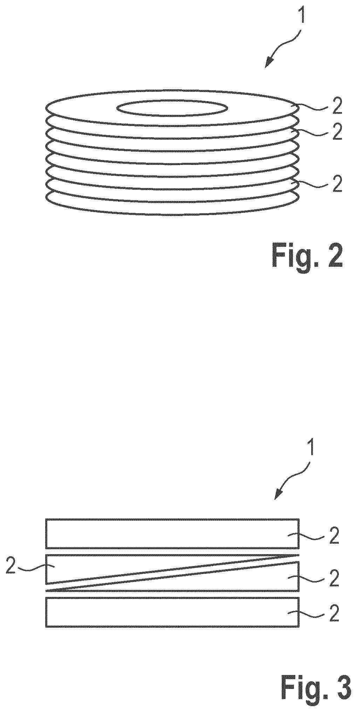

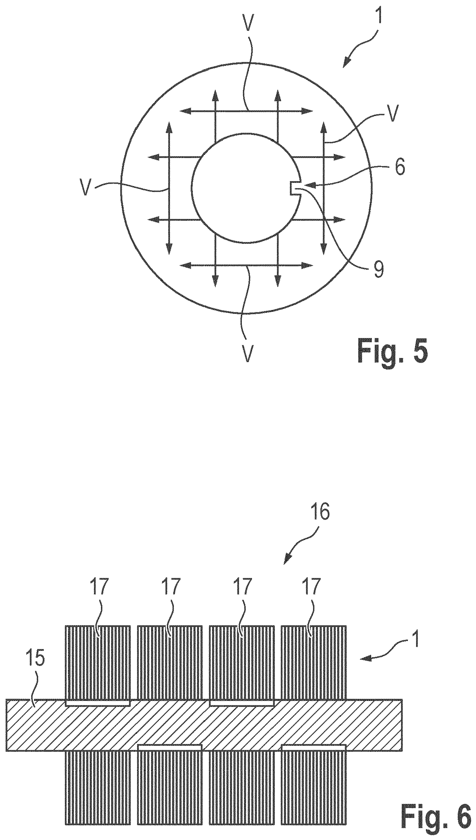

Die derart erzeugten Rotorlamellen 2 werden wie in Figur 2 angedeutet zu einem aus einer Vielzahl dieser aneinandergereihten Rotorlamellen 2 bestehenden Rotorpaket 1 gestapelt, wobei ein solches Rotorpaket 1 aufgrund der in Figur 1b dargestellten, in den Rotorlamellen 2 ausgeformten Federn 9 zur formschlüssigen Übertragung von höheren Drehmomenten auf die z. B. in Figur 6 gezeigte Rotorwelle des ebenfalls der Figur 6 zu entnehmenden Rotors 16 Verwendung findet. Im zur Herstellung der Rotorlamellen 2 verwendeten Elektroblech liegt jedoch für gewöhnlich eine ungleichmäßige Dickenverteilung vor, welche zu Dickenabweichungen innerhalb der Rotorlamellen 2 führen und somit beim Stapeln der Rotorlamellen 2 in Kippfehlern des Rotorpakets 1 resultieren würden. Um dies zu vermeiden, wird zumindest eine Teilmenge der Rotorlamellen 2 vor oder während des Stapelns gedreht, sodass sich die Dickenabweichungen über die Vielzahl an Rotorlamellen 2 ausgleichen. Dies ist hierbei in Figur 3 angedeutet. Neben den Dickenabweichungen können im Elektroblech aufgrund des zur Herstellung genutzten Walzprozesses zudem magnetische Vorzugsrichtungen vorliegen, welche ebenfalls durch Drehen der Rotorlamellen 2 ausgeglichen werden können. Diese Vorzugsrichtungen sowie die Dickenabweichungen sind in den in den Figuren dargestellten Rotorlamellenvorstufen 3 sowie den Rotorlamellen 2 durch Pfeile V angedeutet. Der Ausgleich durch Drehen der Rotorlamellen 2 bedingt zudem ein Ausrichten der Rotorlamellen 2 gegenüber einander, was durch Justagehilfen in den Rotorlamellen 2 deutlich vereinfacht wird. Als solche Justagehilfen können ebenfalls die Federn 9 verwendet werden.

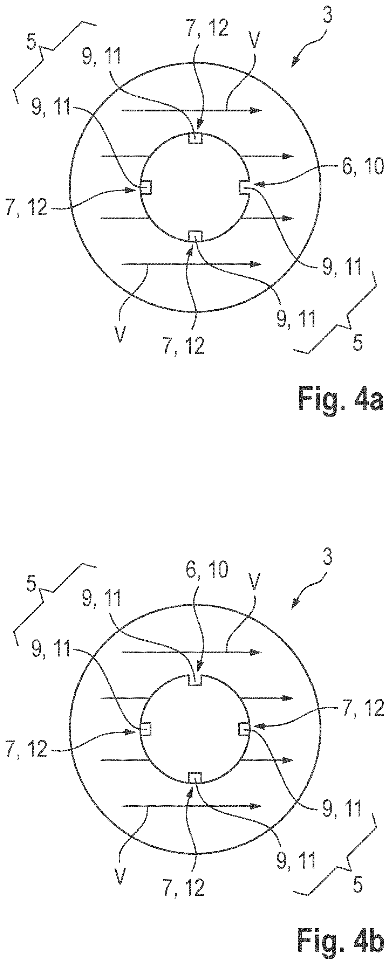

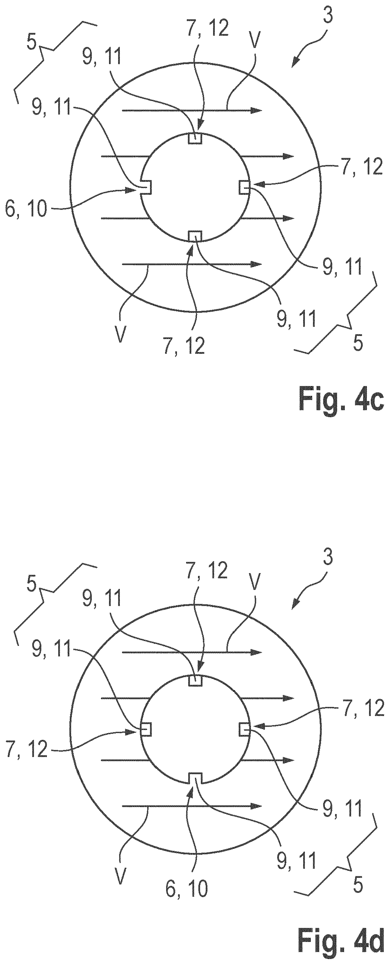

Hierfür ist es jedoch notwendig, dass die dem Soll 6 zugehörigen Federn 9 der Rotorlamellen 2 in den zu den Rotorlamellen 2 fertigzustellenden Rotorlamellenvorstufen 3 eine unterschiedliche Sollposition 10 aufweisen. Figuren 4a bis 4d zeigen, wie dies im Rahmen einer Weiterbildung des Verfahrens ohne die Ausführung mehrerer Stanzstufen realisiert werden kann, welche sich unterscheidende Stanzwerkzeuge aufweisen. Dabei sind Figuren 4a bis 4d vier je aufeinanderfolgend erzeugte Rotorlamellenvorstufen 3 zu entnehmen, wobei die Sollposition 10 jeder dem Soll 6 zugehörigen Feder 9 in den aufeinanderfolgenden Rotorlamellenvorstufen 3 schrittweise umlaufend auf die in Umfangsrichtung des Kernlochs 4 unmittelbar benachbarte Position 11 der der Kumulation 5 zugehörigen Federn 9 wechselt. Der Wechsel erfolgt dabei auf die Laufrichtung des Elektroblechs bezogen, welche in den Darstellungen der über die Pfeile V angedeuteten Dickenabweichung sowie der Vorzugsrichtung gleichgerichtet ist, in mathematisch positiver Richtung. In Figur 4a ist die Sollposition 10 somit durch die dargestellte 0°-Stellung, in Figur 4b durch die 90°-Stellung, in Figur 4c durch die 180°-Stellung und in Figur 4d durch die 270°-Stellung der jeweiligen Feder 9 des Solls 6 bestimmt. Die drei den Überschuss 7 bildenden Federn 9 der Kumulation 5 befinden sich hingegen in einer Trennposition 12 und werden mittels eines trennvariablen Stanzwerkzeugs positionsselektiv aus der Kumulation 5 getrennt. Einerseits kann dafür vorgesehen sein, dass das trennvariable Stanzwerkzeug entsprechend der Anzahl der dem Überschuss 7 zugehörigen drei Federn 9 drei Teilwerkzeuge aufweist, die Teilwerkzeuge und/oder das Stanzwerkzeug drehbar ausgeführt sind und die Teilwerkzeuge zum Trennen des Überschusses 7 durch Drehen in Überdeckung mit den sich in den Trennpositionen 12 befindenden Federn 9 des Überschusses 7 gebracht werden. Andererseits besteht die Möglichkeit, dass die drei Teilwerkzeuge des trennvariablen Stanzwerkzeugs über Koppelelemente in Eingriff bringbar sind und die sich in Überdeckung mit den sich in Trennposition 12 befindenden Federn 9 des Überschusses 7 befindenden Teilwerkzeuge zum Trennen des Überschusses 7 in Eingriff gebracht werden.

Nach dem Trennen des Überschusses 7 und der Rotorlamellen 2 aus dem Elektroblech werden die Rotorlamellen 2 gedreht, sodass die dem Soll 6 zugehörigen Federn 9 zueinander fluchtend angeordnet sind und durch das Stapeln eine Federreihe bilden. Nach dem Stapeln liegt wie in Figur 5 dargestellt ein Rotorpaket 1 vor, in dem die Dickenabweichungen und die Vorzugsrichtungen ausgeglichen sind. Dies ist in Figur 5 über die sich überlagernden Pfeile V angedeutet.

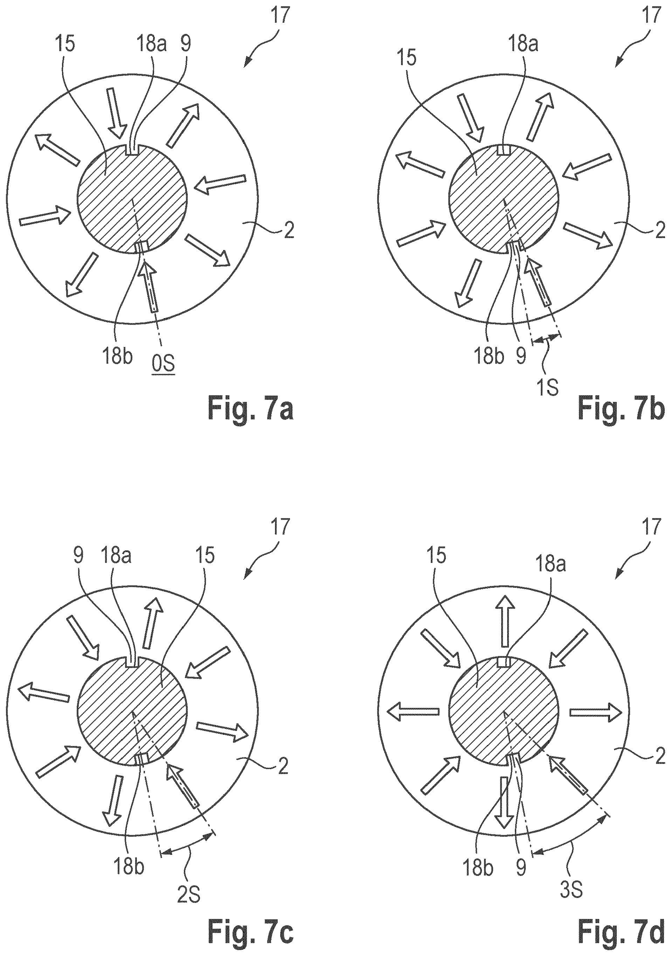

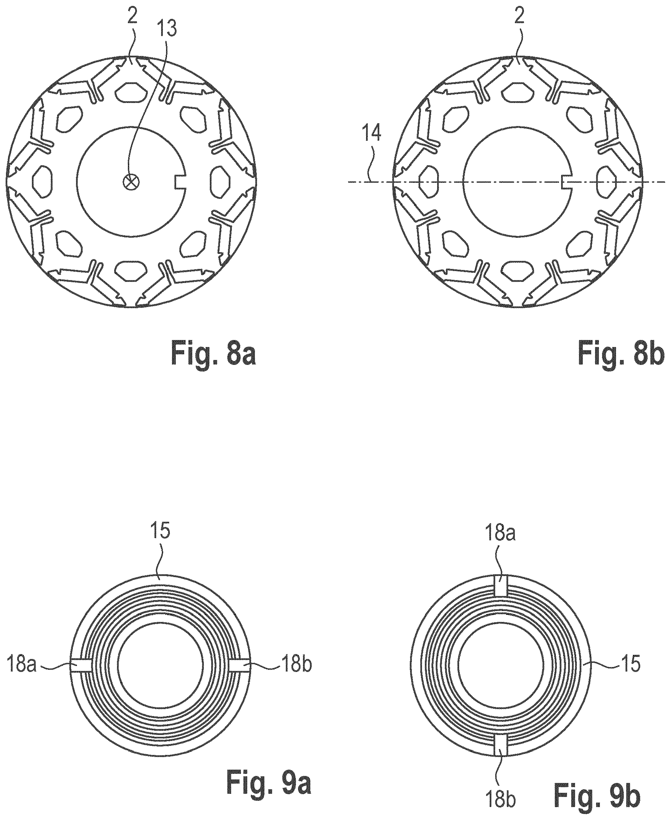

Figuren 6 bis 7d beschreiben zudem einen Anwendungsfall des erfindungsgemäßen Verfahrens zur Herstellung des in Figur 6 dargestellten Rotorpakets 1, welches mit der Rotorwelle 15 den Rotor 16 einer elektrischen Maschine bildet. Das Rotorpaket 1 besteht dabei aus vier Segmenten 17. Die jeweiligen Segmente 17 sind zudem im Schnitt in Figuren 7a bis 7d aufgezeigt und weisen jeweils ein Vielfaches des Schrägungswinkels S auf. Die Segmente 17 lassen sich dabei ohne einen Kippfehler im jeweiligen Segment 17 in der nacheilenden Stanzstufe mittels eines einzigen Stanzwerkzeugs erzeugen. Das Bereitstellen unterschiedlicher Schrägungswinkel S erfolgt durch Drehen der Rotorlamellen 2 in Form der Segmente 17 um zwei sich voneinander unterscheidende Drehachsen 13, 14. Die Drehachsen 13, 14 sind hierbei in Figuren 8a und 8b im Detail aufgezeigt. Die Federn 9 der Rotorlamellen 2 eines Segments 17 greifen dabei in jeweils eine der Nuten 18a, 18b der Rotorwelle 15 ein. Das Segment 17 der Figur 7a weist hierbei den nullfachen, also im Grunde keinen Schrägungswinkel S auf. Durch Drehen um die erste Drehachse 13 wird jedoch das in Figur 6b aufgezeigte Segment 17 bereitgestellt, welches den einfachen Schrägungswinkel S aufweist. Die in Figuren 7c und 7d beschriebenen Segmente 17 sind neben der ersten Drehachse 13 zudem um die zweite Drehachse 14 gedreht oder auch gewendet, sodass das in Figur 7c aufgezeigte Segment 17 den zweifachen Schrägungswinkel S, das in Figur 7d aufgezeigte Segment 17 den dreifachen Schrägungswinkel S bereitstellt.

Aus den Figuren 8a und 8b gehen im Detail die Drehachsen 13, 14 hervor, wobei die erste Drehachse 13 normal zur und die zweite Drehachse 14 in der Ebene der dargestellten Rotorlamelle 2 liegen. Dabei zeigt die Figur 8a eine Vorderseite der Rotorlamelle 2 und die Figur 8b eine bei Drehung der in Figur 8a dargestellten Rotorlamelle 2 um die zweite Drehachse 14 vorliegende Rückseite der Rotorlamelle 2.

Figuren 9a und 9b sind zudem Detaildarstellungen von Rotorwellen 15 zu entnehmen, welche mit jeweils zwei Nuten 18a, 18b versehen sind.

### Bezugszeichenliste

- 1: Rotorpaket
- 2: Rotorlamelle
- 3: Rotorlamellenvorstufe
- 4: Kernloch
- 5: Kumulation

- 6: Soll
- 7: Überschuss
- 8: Umfang
- 9: Federn
- 10: Sollposition

- 11: Position
- 12: Trennposition
- 13: erste Drehachse
- 14: zweite Drehachse
- 15: Rotorwelle

- 16: Rotor
- 17: Segment
- 18a, 18b: Nut
- S: Schrägungswinkel
- V: Pfeil

## Patentansprüche

1. Verfahren zur Herstellung eines Rotorpakets (1) eines Rotors (16) einer elektrischen Maschine, wobei das Rotorpaket (1) durch stapelndes Aneinanderreihen einer Vielzahl an in mehreren aufeinanderfolgenden Stanzstufen zumindest einer Stanzvorrichtung aus einem Elektroblech getrennten Rotorlamellen (2) erzeugt wird, hierfür über die Stanzstufen zunächst eine Rotorlamellenvorstufe (3) der Rotorlamellen (2) erzeugt wird, in welcher ein Kernloch (4) und eine Kumulation (5) aus wenigstens zwei sich vom Umfang (8) des Kernlochs (4) radial nach innen erstreckenden Federn (9) durch Trennen mittels wenigstens eines Stanzwerkzeugs der Stanzvorrichtung in dem Elektroblech freigelegt werden, eine jeweilige Rotorlamelle (2) oder Rotorlamellenvorstufe (3) in einer Ausstanzstufe aus dem Elektroblech getrennt und die Rotorlamellen (2) auf das Trennen folgend gestapelt werden, **dadurch gekennzeichnet, dass** sich die Kumulation (5) der Federn (9) aus einem Soll (6) an Federn (9) in den Rotorlamellen (2) und einem Überschuss (7) an Federn (9) zusammensetzt, wobei der Überschuss (7) an Federn (9) in einer den die Kumulation (5) erzeugenden Stanzstufen nacheilenden Stanzstufe durch Trennen entfernt wird, sodass das Soll (6) in der Rotorlamellenvorstufe (3) verbleibt.

2. Verfahren nach Anspruch 1, **dadurch gekennzeichnet, dass** eine jede der dem Soll (6) zugehörigen Federn (9) eine Sollposition (10) aufweist, wobei diese Sollposition (10) in den erzeugten Rotorlamellenvorstufen (3) im Lauf des Verfahrens über die Positionen (11) der der Kumulation (5) zugehörigen Federn (9) wechselt.

3. Verfahren nach Anspruch 1 oder 2, **dadurch gekennzeichnet, dass** die Sollposition (10) jeder dem Soll (6) zugehörigen Feder (9) je aufeinanderfolgend erzeugter Rotorlamellenvorstufen (3) über die Positionen (11) der der Kumulation (5) zugehörigen Federn (9) wechselt.

4. Verfahren nach zumindest einem der vorangehenden Ansprüche, **dadurch gekennzeichnet, dass** die Sollposition (10) jeder dem Soll (6) zugehörigen Feder (9) in je aufeinanderfolgend erzeugten Rotorlamellenvorstufen (3) schrittweise umlaufend auf eine in Umfangsrichtung des Kernlochs (4) unmittelbar benachbarte Position (11) der der Kumulation (5) zugehörigen Federn (9) wechselt.

5. Verfahren nach zumindest einem der vorangehenden Ansprüche, **dadurch gekennzeichnet, dass** lediglich eine einzige Stanzstufe mit einem Stanzwerkzeug zum Freilegen des Kernlochs (4) und der Kumulation (5) von Federn (9) in einer jeden Rotorlamellenvorstufe (3) bestimmt ist.

6. Verfahren nach zumindest einem der vorangehenden Ansprüche, **dadurch gekennzeichnet, dass** sich die den Überschuss (7) bildenden Federn (9) der Kumulation (5) in einer Trennposition (12) befinden, wobei diese sich in der Trennposition (12) befindenden Federn (9) in der nacheilenden Stanzstufe mittels eines trennvariablen Stanzwerkzeugs positionsselektiv aus der Kumulation (5) getrennt werden.

7. Verfahren nach zumindest einem der vorangehenden Ansprüche, **dadurch gekennzeichnet, dass** das trennvariable Stanzwerkzeug eine Anzahl an Teilwerkzeugen aufweist, welche der Anzahl des Überschusses (7) an Federn (9) entspricht, wobei die Teilwerkzeuge und/oder das Stanzwerkzeug drehbar ausgeführt sind und die Teilwerkzeuge des trennvariablen Stanzwerkzeugs zum Trennen des Überschusses (7) durch Drehen in Überdeckung mit den sich in Trennposition (12) befindenden Federn (9) des Überschusses (7) gebracht werden.

8. Verfahren nach zumindest einem der vorangehenden Ansprüche, **dadurch gekennzeichnet, dass** das trennvariable Stanzwerkzeug eine Anzahl an Teilwerkzeugen aufweist, welche der Anzahl der Kumulation (5) an Federn (9) entspricht, hierbei die Teilwerkzeuge über Koppelelemente in Eingriff bringbar sind und die sich in Überdeckung mit den sich in Trennposition (12) befindenden Federn (9) des Überschusses (7) befindenden Teilwerkzeuge zum Trennen des Überschusses (7) in Eingriff gebracht werden.

9. Verfahren nach zumindest einem der vorangehenden Ansprüche, **dadurch gekennzeichnet, dass** ein Drehen von Rotorlamellenvorstufen (3) oder von Rotorlamellen (2) um eine erste Drehachse (13) normal zur und/oder um eine sich von der ersten Drehachse (13) unterscheidende zweite Drehachse (14) in der Ebene der Rotorlamellenvorstufe (3) oder der Rotorlamelle (2) erfolgt.

10. Verfahren nach zumindest einem der vorangehenden Ansprüche, **dadurch gekennzeichnet, dass** die Kumulation (5) aus vier in Umfangsrichtung des Kernlochs (4) gleichmäßig verteilt ausgeformten Federn (9) besteht, das Soll (6) eine Feder (9) und der Überschuss (7) somit drei Federn (9) betragen.
